(19) Europäisches Patentamt / European Patent Office / Office européen des brevets

(11) EP 1 865 025 B1

(12) **EUROPEAN PATENT SPECIFICATION**

(45) Date of publication and mention of the grant of the patent:
**23.05.2012 Bulletin 2012/21**

(21) Application number: **05767339.4**

(22) Date of filing: **28.07.2005**

(51) Int Cl.:
*C08L 27/12* (2006.01) *C08K 5/14* (2006.01)

(86) International application number:
**PCT/JP2005/013821**

(87) International publication number:
**WO 2006/011547 (02.02.2006 Gazette 2006/05)**

(54) **PEROXIDE-CURABLE FLUOROELASTOMER COMPOSITION**

MIT PEROXIDEN VERNETZBARE FLUOROELASTOMERZUSAMMENSETZUNG

COMPOSITION FLUOROÉLASTOMÈRE DURCISSABLE AU PEROXYDE

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.07.2004 JP 2004220831**

(43) Date of publication of application:
**12.12.2007 Bulletin 2007/50**

(73) Proprietor: **DAIKIN INDUSTRIES, LTD.**
**Osaka-shi, Osaka 530-8323 (JP)**

(72) Inventors:
- **IRIE, Masaki,**
**c/o Yodogawa-seisakusho,**
**Settsu-shi, Osaka 5668585 (JP)**
- **NISHIMURA, Yousuke,**
**c/o Yodogawa-seisakusho,**
**Settsu-shi, Osaka 5668585 (JP)**
- **FUJISAWA, Manabu,**
**c/o Yodogawa-seisakusho,**
**Settsu-shi, Osaka 5668585 (JP)**
- **KISHINE, Mitsuru,**
**c/o Yodogawa-seisakusho,**
**Settsu-shi, Osaka 5668585 (JP)**
- **OTA, Daisuke,**
**c/o Yodogawa-seisakusho,**
**Settsu-shi, Osaka 5668585 (JP)**

(74) Representative: **HOFFMANN EITLE**
**Patent- und Rechtsanwälte**
**Arabellastraße 4**
**81925 München (DE)**

(56) References cited:
**EP-A- 0 398 241** **EP-A- 0 784 064**
**JP-A- 1 319 512** **JP-A- 53 125 491**
**JP-A- 60 221 409** **US-A- 4 243 770**
**US-A- 5 077 359**

- **DATABASE WPI Week 199634 Derwent Publications Ltd., London, GB; AN 1996-339226 XP002457367 & JP 08 157538 A (DAIKIN KOGYO KK [JP]) 18 June 1996 (1996-06-18)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 865 025 B1

Printed by Jouve, 75001 PARIS (FR)

## Description

TECHNICAL FIELD

The present invention relates to a peroxide-vulcanizable fluorine-containing elastomer composition that is improved in processability such as having excellent fluidity, and a molded article which is obtained by vulcanizing the composition.

BACKGROUND ART

Vinylidene fluoride-hexafluoropropylene (VdF-HFP)-based or tetrafluoroethylene (TFE)-perfluoro (alkyl vinyl ether)-based fluorine-containing elastomer compositions are widely used in the fields such as automobile industries, semiconductor industries and chemical industries for O-rings, gaskets, hoses, stem seals, shaft seals, diaphragms and the like which are used under severe environments since such fluorine-containing elastomer compositions show prominent chemical resistance, solvent resistance and heat resistance.

Examples of a fluorine-containing elastomer composition used for such applications are iodine-containing fluoroelastomers having a highly active iodine atom at the end of its molecule. These iodine-containing fluoroelastomers are capable of realizing excellent vulcanization efficiency by the iodine atom at the end of the molecule, and are excellent in vulcanizability. The iodine-containing fluoroelastomers are also widely used for a peroxide-vulcanized molded article since it is not necessary to add chemical substances containing a metallic component.

Though fluorine-containing elastomers capable of peroxide vulcanization (see, for example, JP-A-53-125491 corresponding to US 4, 243, 770 and JP-A-62-12734) have excellent performances as described above, a processing method of the composition is generally compression molding or transfer molding, but these methods have defects with respect to their cycle times and wastes. On the other hand, there have been known injection molding which is advantageous in its cycle time, and as a further advanced molding process, integral molding with other member such as a resin, however, it is necessary to make a viscosity of the elastomer low for the purpose of having more excellent fluidity. However, even if making a viscosity low is intended to be achieved by increasing amounts of a chain transfer agent and/or a crosslinking site monomer in iodine transfer polymerization, productivity is deteriorated since a polymerization speed is largely lowered, and if such a problem is tried to be solved by increasing an amount of a polymerization initiator, non-iodine and/or non-bromine ends increase relatively, and performances of vulcanized articles thereof are lowered (see, for example, Masayoshi Tatemoto, p19, 86/6, Symposium on Micromolecules, Control of Polymer Structure in Radical Polymerization, The Society of Polymer Science, Japan, (1986)). Therefore, a fluorine-containing elastomer satisfying both productivity and physical properties of the vulcanized article thereof has not been known.

On the other hand, a liquid rubber is suitable for a thermoplasticizer processing machine capable of pump transportation, and a peroxide-vulcanizable fluorine-containing liquid elastomer containing iodine atoms has been known (see, for example, JP-A-56-57811, JP-A-10-67821, JP-A-11-152311 and WO-98/15583). However, the fluorine-containing liquid elastomer has a purpose of being treated as liquid, thus, the liquid elastomer is different from the elastomer of the present invention which is applicable to general molding processes. Further it is difficult to use the fluorine-containing liquid elastomer in kneading operation with a general rubber kneading equipment such as a banbury mixer and a kneader by reason of its adhesion, and equipment having a specific cooling function is necessary to increase a viscosity even in an internal mixer and a roll mixer. Further, the liquid elastomer has a defect such as high possibility of causing molding failure unless air bubbles contained in the compound are removed. In addition, the peroxide-vulcanizable fluorine-containing liquid elastomer costs high since a large amount of iodine atoms are contained, and the elastomer also has a defect such that an amount of harmful gas to be generated during vulcanization increases.

On the other hand, a fluorine-containing elastomer with a low viscosity suitable for vulcanization systems other than peroxide vulcanization system such as polyol vulcanization system has been known (see, for instance, pamphlet of WO 2004/009647). However, in the polyol vulcanization system, a compression set is deteriorated by lowering a viscosity, and particularly when the secondary vulcanization step is omitted, there has been a problem that performances thereof become too poor to stand for practical uses.

It has been suggested that processability is improved by a peroxide-vulcanizable composition comprising a fluorine-containing elastomer obtained by co-coagulating three kinds of fluorine-containing elastomers having different Mooney viscosities (see, for example, JP-A-2000-34381), but the processability thereof was not sufficient.

A filling agent (filler) such as carbon black has been often used as an additive in a fluorine-containing elastomer, however, there has been a problem that a viscosity of the composition increases while filling a filler, thereby deteriorating kneading property and fluidity at molding. A large amount of such filler has to be compounded in order to impart functions such as conductivity and heat-releasing property in particular, however in prior arts, there has been great difficulty in processing, or the process could not be substantially performed for the reasons such as increase in viscosity, scorching, and kneading defect. An example of the cause thereof is that increase of viscosity is remarkable when a large amount

of filler is compounded since a viscosity of a conventional fluororubber is too high, or affinity with a filler is scarce and kneading is hardly carried out since adhesion is insufficient.

EP 0 398 241 A2 relates to peroxide curable fluoroelastomers prepared by continuous emulsion polymerization in the presence of iodinated compounds. According to Examples 1 and 3 of this document, fluoroelastomers were prepared from tetrafluoroethylene, vinylidene fluoride and perfluoro-(methyl)vinyl ether (PMVE) and are said to have iodine contents of 0.32 and 0.50%, respectively. From these fluoroelastomers a fluoroelastomer composition was prepared by mixing 100 parts fluoroelastomer with 30 parts carbon black, 1.5 parts triallyl isocyanurate (TAIC) and 1.5 parts peroxide.

EP 0 784 064 A1 relates to vulcanized articles obtainable by peroxide and/or ionic vulcanization of a vulcanizable fluoroelastomer containing iodine and/or bromine atoms in the chain and/or in the terminal positions to the macromolecules and comprising between 0.01 and 1.0 moles of monomeric units derived from a bis-olefin. In Example 1 and Comparative Example 2 of this document, a monomer mixture consisting of vinylidene fluoride, hexafluoropropene and tetrafluoroethylene was used and then peroxide cured together with 30 parts by weight of carbon black based on 100 parts of the vulcanizable polymer.

US 5,077,359 relates to a continuous emulsion polymerization process for preparing a peroxide-curable fluoroelastomer in which a substantial number of chain ends are terminated by iodo groups. Example 4 of this document subjects a gaseous monomer mixture consisting of tetrafluoroethylene, vinylidene fluoride and hexafluoropropylene to this emulsion polymerization process. In Example 4 a curable fluoroelastomer composition was prepared by mixing 100 parts of fluoroelastomer having an iodine content of 0.30 weight % with 30 weight % of carbon black and other ingredients. JP-A-08157538 relates to a fluorine containing copolymer comprising 65-85 mol% of vinylidene fluoride (VdF) unit; 3-20 mol% of perfluoro (methylvinylether) (PMVE) unit; 3-25 mol% of hexafluoropropylene (HFP) unit; and 3-25 mol% of tetrafluoroethylene (TFE) unit. The copolymer is obtained by radical polymerization in the presence of a diiodide compound of Formula $RI_2$ (where R=1-16C fluorohydrocarbon or chlorofluorohydrocarbon group, or 1-3 hydrocarbon group). The amount of the iodine introduced into the copolymer from the diiodide compound is 0.01-1 weight % of the total weight of the copolymer, and the Mooney viscosity (ML(1+10)100 [deg]-C) of the copolymer is 20-150. Also described is a composition containing 100 parts by weight of the above-mentioned copolymer, 0.05-10 parts by weight of an organic peroxide, and 0.1-10 parts by weight of a crosslinker. The examples of this document use 20 parts by weight of carbon black based on 100 parts fluoroelastomer.

## DISCLOSURE OF INVENTION

The present invention provides a peroxide-vulcanizable fluorine-containing elastomer composition which is remarkably improved in fluidity and thereby exhibits improved processability, though the fluorine-containing elastomer composition could be applied to molding only by a molding process having a problem in its processability, for instance, compression molding or transfer molding which has been used so far as a general molding process. The present invention further provides a molded article obtained by vulcanizing the composition.

Namely, the present invention relates to a fluorine-containing elastomer composition comprising:

(A) a fluorine-containing elastomer composed of (i) a structural unit derived from vinylidene fluoride and (ii) a structural unit derived from at least one kind of monomer selected from the group consisting of hexafluoropropylene, tetrafluoroethylene, ethylene, propylene, chlorotrifluoroethylene, perfluoro (alkyl vinyl ether) in which the alkyl group may contain oxygen in the form of an ether linkage, and having

(a) a number average average molecular weight (Mn) of 30, 000 to 70,000 g/mol,
(b) iodine content of 0.3 to 1.0 % by weight,
(c) a molecular weight distribution (weight average molecular weight Mw/number average molecular weight (Mn) of 1.3 to less than 4.0, and
(d) a Mooney viscosity ($ML_{1+10}$ at 100°C) of 3-30;

(B) an organoperoxide vulcanizing agent in an amount of 0.1 to 10 parts by weight based on 100 parts by weight of said fluorine-containing elastomer;

(C) a polyfunctional vulcanization aid in an amount of 0.01 to 20 parts by weight based on 100 parts by weight of said fluorine-containing elastomer; and

(D) a filler in an amount of 60 to 200 parts by weight based on 100 parts by weight of said fluorine-containing elastomer.

It is preferable that the Mooney viscosity ($ML_{1+10}$ at 121°C) of the fluorine-containing elastomer composition

is not more than 120, not more than 0.4A + 4 and not less than 4, wherein A is the amount of filler (D) in parts by weight per 100 parts by weight of elastomer (A).

It is preferable that the filler (D) is selected from the group consisting of carbon black, natural graphite, artificial graphite, silica, silicate, boron nitride, aluminum nitride, magnesium oxide, alumina and carbon nanotube.

The present invention also relates to a molded article which is obtained by vulcanizing the fluorine-containing elastomer composition.

BEST MODE FOR CARRYING OUT THE INVENTION

The present invention relates to a fluorine-containing elastomer composition comprising:

(A) a fluorine-containing elastomer as defined in claim 1 and having (a) a number average molecular weight (Mn) of 30,000 to 70,000 g/mol, and (b) an iodine content of 0.3 to 1.0 % by weight; and
(B) an organoperoxide vulcanizing agent.

The number average molecular weight (Mn) of the fluorine-containing elastomer (A) is 30,000 to 70,000 g/mol. A preferable lower limit is 35,000 g/mol, and a more preferable lower limit is 40,000 g/mol, and a preferable upper limit is 65,000 g/mol, and a more preferable upper limit is 60,000 g/mol. When the number average molecular weight (Mn) of the fluorine-containing elastomer (A) is too small, the fluorine-containing elastomer (A) becomes liquid, and it is not preferable since general rubber kneading equipments or mold-processing equipments cannot be used and thus an equipment for liquid is required to be used. On the other hand, when the number average molecular weight (Mn) of the fluorine-containing elastomer (A) exceeds 70,000 g/mol, since prominent fluidity is not exhibited, there is a tendency that problems with respect to a cycle time and wastes are caused like in the prior art.

From the same viewpoint, the Mooney viscosity ($ML_{1+10}$ at 100°C) of the fluorine-containing elastomer (A) is preferably 3 to 30.

The molecular weight distribution (weight average molecular weight Mw/number average molecular weight Mn) of the fluorine-containing elastomer (A) is not less than 1.3 and less than 4.0 from the viewpoint of balance between easiness in preparation and processability.

The iodine content of the fluorine-containing elastomer (A) is 0.3 to 1.0 % by weight, preferably 0.35 to 0.9 % by weight, more preferably 0.4 to 0.8 % by weight. When the iodine content is within this range the balance between processability and fluidity is excellent.

The fluorine-containing elastomer (A) is not particularly limited as long as the elastomer is composed of a structural unit derived from vinylidene fluoride and

at least one monomer selected from the group consisting of hexafluoropropylene, tetrafluoroethylene, ethylene, propylene, chlorotrifluoroethylene and perfluoro (alkyl vinyl ether) in which the alkyl group may contain oxigen in the from of an This composition is favorable from the viewpoint that sealing property at a high temperature, chemical resistance and low gas permeation, which are characteristics of a fluororubber, are exhibited. Among these, elastomers comprising perfluoro(alkyl vinyl ether) can be suitably used for the purpose of improving low temperature resistance.

It is preferable that the fluorine-containing elastomer (A) comprises (A1) 40 to 85 % by mol of vinylidene fluoride, (A2) 0 to 30 % by mol of tetrafluoroethylene, and (A3) 15 to 45 % by mol of hexafluoropropylene and/or perfluoro(alkyl vinyl ether) represented by the general formula (1):

$$CF_2=CF-R_f^1$$

wherein $R_f^1$ is a group represented by

$$-(OCFY^1CF_2)_nX^1$$

wherein $Y^1$ is a perfluoroalkyl group having 1 to 3 carbon atoms, $X^1$ is a fluorine atom or a hydrogen atom, and n is an integer of 1 to 4, or $-OR_f^2$, and $R_f^2$ is a perfluoroalkyl group which has 1 to 3 carbon atoms where may contain an ether linkage-formable oxygen atom.

It is preferable that the fluorine-containing elastomer (A) further comprises (E) 0.01 to 3 % by weight of a unit of an iodine-containing chain transfer agent which is a peroxide-vulcanizable component, and (F) 0 to 3 % by weight of a monomer unit forming a curable site and represented by the general formula (2):

$$CX^3_2=\overset{\overset{\displaystyle X^2}{|}}{C}-R_f^2-Y^2 \qquad (2)$$

wherein $Y^2$ is an iodine atom or a bromine atom, $X^2$ and $X^3$ are the same or different, and each is a hydrogen atom or a fluorine atom, $R_f^2$ is a bivalent alkylene group having 0 to 40 carbon atoms, which is preferably substituted with fluorine atoms in a part or on the whole, and may contain oxygen in the form of an ether linkage.

Among the compounds represented by the general formula (1), perfluoro(methyl vinyl ether), perfluoro(propyl vinyl ether), $CF_2$=CF-$OCF_2$-$OCF_2CF_2CF_3$ and $CF_2$=CF-$OCF_2CF_2$-$OCF_3$ are particularly preferable.

Examples of the iodine-containing chain transfer agent (E) are monoiodoperfluoromethane, monoiodoperfluoroethane, monoiodoperfluoropropane, monoiodoperfluorobutane [e.g., 2-iodoperfluorobutane and 1-iodoperfluoro(1,1-dimethylethane)], monoiodoperfluoropentane [e.g., 1-iodoperfluoro(4-methylbutane)], 1-iodo-perfluoro-n-octane, monoiodoperfluorocyclobutane, 2-iodoperfluoro(1-cyclobutylethane)cyclohexane, monoiodoperfluorocyclohexane, monoiodotrifluorocyclobutane, monoiododifluoromethane, monoiodomonofluoromethane, 2-iodo-1-hydroperfluoroethane, 3-iodo-1-hydroperfluoropropane, monoiodomonochlorodifluoromethane, monoiododichloromonofluoromethane, 2-iodo-1,2-dichloro-1,1,2-trifluoroethane, 4-iodo-1,2-dichloroperfluorobutane, - 6-iodo-1,2-dichloroperfluorohexane, 4-iodo-1,2,4-trichloroperfluorobutane, 1-iodo-2,2-dihydroperfluoropropane, 1-iodo-2-hydroperfluoropropane, monoiodotrifluoroethylene, 3-iodoperfluoropropene-1, 4-iodoperfluoropentene-1, 4-iodo-5-chloroperfluoropentene-1, 2-iodoperfluoro(1-cyclobutenyl ethane), 1,3-diiodoperfluoropropane, 1,4-diiodoperfluoro-n-butane, 1,3-diiodo-2-chloroperfluoropropane, 1,5-diiodo-2,4-dichloroperfluoro-n-pentane, 1,7-diiodoperfluoro-n-octane, 1,2-di(iododifluoromethyl)perfluorocyclobutane, 2-iodo-1,1,1-trifluoroethane, 1-iodo-1-hydroperfluoro(2-methylethane), 2-iodo-2,2-dichloro-1,1,1-trifluoroethane, 2-iodo-2-chloro-1,1,1-trifluoroethane, 2-iodoperfluoroethyl perfluorovinyl ether, 2-iodoperfluoroethyl perfluoroisopropyl ether, 3-iodo-2-chloroperfluorobutyl perfluoromethyl thioether, 3-iodo-4-chloroperfluoro butylic acid, diiodomethane, 1,6-diiodoperfluorohexane, 1,6-diiodo-3,3,4,4-terafluorohexane, 1-bromo-2-iodoperfluoroethane and 1-bromo-3-perfluoropropane.

Among these, from the viewpoint of easiness of synthesis, reactivity, economical efficiency and stability, diiodomethane, 1,4-diiodoperfluorobutane, 1,6-diiodoperfluorohexane, 1,6-diiodo-3,3,4,4-tetrafluorohexane, 1,3-diiodoperfluoropropane, 1,3-diiodo-2-chloroperfluoropropane, 1,2-di(iododifluoromethyl)perfluorocyclobutane, 1-bromo-2-iodoperfluoroethane and 1-bromo-3-iodoperfluoropropane are particularly preferable.

The compound represented by the general formula (2) gives an effect of increasing a crosslinking density and improving compression set by introducing an iodine atom and/or a bromine atom in a position other than both ends of a polymer, and therefore, is used as a monomer forming a curable site.

In addition to the compound represented by the general formula (2), compounds generally used as a monomer forming a curable site can be optionally suitably used. Concretely, examples are iodized olefins disclosed in USP No. 5674959 and represented by the formula:

$$CHR = CH\text{-}Z\text{-}CH_2CHR\text{-}I$$

wherein R is a hydrogen atom or a methyl group, Z is a linear or branched perfluoroalkylene group having 1 to 18 carbon atoms and arbitrarily containing at least one ether oxygen atom, and compounds disclosed in JP-A-62-12734 and represented by the formula:

$$XCH_2CF_2CF_2(OCH_2CF_2CF_2)_m(OCFYCF2)_nOCF = CF_2$$

wherein X is an iodine atom or a bromine atom, m is an integer of 0 to 5, n is an integer of 0 to 2, and Y is a fluorine atom or a trifluoromethyl group. Further, iodoethylene, 4-iodo-3,3,4,4-tetrafluorobutene, 3-chloro-4-iodo-3,4,4-trifluorobutene, 2-iodo-1,1,2,2-tetrafluoro-1-(vinyloxy)ethane, 2-iodo-1-(perfluorovinyloxy)-1,1,2,2-tetrafluoroethylene, 1,1,2,3,3,3-hexafluoro-2-iodo-1-(perfluorovinyloxy)propane, 3,3,4,5,5,5-hexafluoro-4-iodopentene, iodotrifluoroethylene and perfluoro-4-iodobutene can be also suitably used.

Non-conjugated diene has the same effects as the monomer forming a curable site, and for example, 1,4-pentadiene, 1,5-hexadiene, 1,7-octadiene, 3,3,4,4-tetrafluoro-1,5-hexadiene, and 3,3,4,4,5,5,6,6-octafluoro-1,7-octadiene are preferable.

The preparation process of the fluorine-containing elastomer composition (A) used in the present invention is not particularly limited, and the preparation process is preferably an aqueous emulsion polymerization or suspension polymerization method in a semibatch system. It is preferable that the fluorine-containing elastomer (A) is prepared

under the conditions of the reduced temperature of not less than 0.95, preferably not less than 0.97, more preferably not less than 0.98, further preferably not less than 1.00, and the reduced pressure of not less than 0.80, preferably not less than 0.85, more preferably not less than 0.90, further preferably not less than 1.00. The reduced temperature and the reduced pressure are used for correcting a small error of a critical constant calculated from the critical temperature and critical pressure of each monomer in the gaseous phase in the reaction vessel and proportion of each monomer according to the Peng-Robinson equation. Both of the reduced temperature and reduced pressure of the monomer mixture in the gaseous phase are higher than the specified values, thereby making it possible to carry out the polymerization under high monomer density, and polymers having a small amount of end groups derived from an initiator are obtained, thus, the compression set is remarkably improved. Particularly when a chain transfer agent is used in a relatively large amount as the present invention, while a reaction speed is largely lowered, since the end groups derived from an initiator as described above increases if the initiator is increased, there has been a problem that the reaction is conducted unavoidably with a small amount of an initiator at the cost of productivity. However, the problems with physical properties and productivity can be solved under the condition that both of the above-described reduced temperature and reduced pressure are higher than the specified values. For instance, in JP-A-6-508161, a molar ratio of an iodized product chain transfer agent to an initiator is generally preferably within a range from 3/ 1 to 20/1, and the larger the ratio is, the more favorable physical properties are, and the productivity tends to be poorer. However, surprisingly even in the case of using only such a small amount of an initiator as largely exceeding 20/1, it was found in the present invention that polymerization can proceed at a far faster speed as compared with known similar polymerizations.

In the instant specification, the reduced temperature is determined by the equation:

$$\text{Reduced temperature } T_R = T/T_c$$

wherein T is an actual polymerization temperature and $T_c$ is a critical temperature calculated using the Peng-Robinson equation, and similarly the reduced pressure is determined by the equation:

$$\text{Reduced pressure } P_R = P/P_c$$

wherein P is an actual polymerization pressure and $P_c$ is a critical pressure calculated using the Peng-Robinson equation.

Described below is the Peng-Robinson equation, which determines the critical temperature and the critical pressure. It is commonly known that composition distribution tends to occur easily in the obtained polymer as the initial monomer density in the polymerization vessel is higher and that the monomer density of the initial monomers increases sharply particularly around the critical point. However, when at least two monomer components are copolymerized, the critical point of the gaseous phase monomer mixture fluctuates depending on kind and composition ratio of the monomers. The Peng-Robinson equation is employed as a method of calculating the critical point of the monomer mixture from the critical temperature and critical pressure of each independent monomer and the initial monomer composition ratio. The principle of this equation is described in D. Y. Peng and D. B. Robinson, "A New Two-Constant Equation of State", Ind. Eng. Chem. Fund., Vol. 15, (1976), pp. 59 to 64. As an overview, the principle is based on the following equation and for actual calculation, a process simulator such as Aspen Plus (made by Aspen Technology, Inc.) can be used.

An outline of the Peng-Robinson equation is as follows.

$$P = RT/(V_m-b)-a/[V_m(V_m+b)+b(V_m-b)]$$

$$a = \sum_i \sum_j x_i x_j (a_i a_j)^{0.5}$$

$$b = \sum_i x b_i$$

In the above equation, $a_i$ and bi are respectively as defined below.

$$a_i = \alpha_i 0.45724 R^2 T_{ci}^2 / P_{ci}$$

$$\alpha_i(T) = [1 + m_i (1 - T_{ci}^{0.5})]^2$$

$$m_i = 0.37464 + 1.54226\omega_i - 0.26992\omega_i^2$$

$$b_i = 0.0778 R T_{ci} / P_{ci}$$

Also, each parameter represents the following.

P: pressure
T: temperature
$V_m$: volume
R: gas constant
$X_i$: composition ratio of monomer component i
$T_{ci}$: critical temperature of monomer component i
$P_{ci}$: critical pressure of monomer component i
$\omega_i$: eccentric factor of monomer component i

According to calculation of the critical temperature and the critical pressure when the composition inside the polymerization vessel is VdF/HFP = 36/64 (% by mol) by the Peng-Robinson equation using Aspen Plus Ver. 11.1, $T_c$ = 87.7°C and $P_c$ = 3.05x MPa are found. When converted by the reduced temperature $T_R$ = 0.95 and the reduced pressure $P_R$ = 0.80, the polymerization conditions in this case are T = not less than 69.7°C and P = not less than 2.44 MPa.
It is not necessary for a monomer in an amount of not more than 4 % by weight in the composition in the polymerization vessel to be taken into consideration for the calculation by the Peng-Robinson equation.
Also, with respect to the temperature and pressure that satisfy the conditions calculated from the above equation, the polymerization temperature is more preferably 10 to 120°C, particularly preferably 30 to 100°C, and the polymerization pressure is preferably not less than 3 MPa, more preferably not less than 3.5 MPa, further preferably not less than 4 MPa. Also, the upper limit of the pressure is not particularly limited, but in consideration of handling of the monomer and cost of reaction facility, the pressure is preferably not more than 15 MPa, more preferably not more than 12 MPa.
Furthermore, stirring is preferably conducted. By stirring, the monomer concentration in the polymer particles can be kept high throughout the polymerization.
As the stirring means, for example, an anchor blade, a turbine blade and an inclined blade can be used, but from the viewpoint that diffusion of the monomers and dispersion stability of the polymer are favorable, stirring is preferably conducted by a large-scale blade such as FULLZONE or MAXBLEND.
The stirring machine can be a horizontal stirring equipment or a vertical stirring equipment.
The reaction system preferably has a monomer phase part substantially. Herein, "having a monomer phase part substantially" denotes conducting polymerization in the state that the volume occupied by a medium such as water is not more than 90 %, preferably not more than 80 % of the volume of a polymerization vessel. If the volume is more than 90 %, the monomer is difficult to be supplied into the medium, leading to the tendency to lower the polymerization rate or deteriorate physical properties of the polymer.
As means for increasing a polymerization rate, seed polymerization described in a pamphlet WO 00/01741 is preferable.
The reaction vessel used in the present invention is a pressure-resistance vessel, as polymerization is conducted under applied pressure. To the reaction vessel is added an aqueous medium (usually deionized water) for emulsion polymerization containing polymer particles of the same composition as the aimed polymer, which is to be a liquid phase.
The reaction vessel is composed of this liquid phase and a gaseous phase, and after the gaseous phase is replaced with nitrogen or the like, the polymerizable monomers are introduced therein. Subsequently, the inside of the reaction vessel, particularly the liquid phase, is stirred to supply the polymerizable monomers from the gaseous phase to the liquid phase. The monomers supplied to the liquid phase permeate into the polymer particles and raise the

concentration of polymerizable monomers in the polymer particles. By continuing to supply monomers into the gaseous phase, the monomer concentration in the polymer particles reaches saturation (it can be said that a rate of monomer supply into the liquid phase reaches equilibrium) and then a polymerization initiator and an iodine compound are added to start polymerization.

As polymerization is continued, the monomers are consumed and the monomer concentration in the produced polymer particles decreases. Therefore, monomers (additional monomers) must be constantly supplied into the polymer particles.

Although the ratio of the additional monomer depends on the composition of the added monomer and the aimed polymer, a ratio that keeps a monomer composition constant in the reaction vessel at the initial stage of the polymerization is preferable.

The number of fluorine-containing polymer particles at the completion of polymerization is preferably not less than $5\times10^{13}$ per 1 g of water, preferably not less than $1.0\times10^{14}$ per 1 g of water. When the number of particles is less than $5\times 10^{13}$, not only a polymerization rate is lowered, but also a particle size becomes large and unstable, and there is a tendency that adhesion of polymers to the polymerization vessel increases.

Examples of polymerization methods increasing the number of the particles at the completion of polymerization are microemulsion method described in JP-B-63-8406 and JP-B-62-288609, a method of increasing an amount of emulsifier as a general process and the like in addition to the seed polymerization.

A segmented elastomer obtained by further polymerizing crystalline segments sequentially with the obtained fluorine-containing elastomer is suitably used for thermoplastics.

The crystalline segments are not particularly limited. Examples thereof are combinations of tetrafluoroethylene, perfluoro(propyl vinyl ether), hexafluoropropylene, ethylene (ET), propylene, butene, vinylidene fluoride and the like.

In the preparation process of the fluorine-containing elastomer used in the present invention, oil soluble radical polymerization initiators or water soluble radical initiators can be used as a polymerization initiator.

Oil soluble peroxides well known are usually used as the oil soluble radical polymerization initiator used in the present invention. Represented examples thereof are, for instance, dialkylperoxycarbonates such as diisopropylperoxydicarbonate and di-sec-butylperoxydicarbonate; peroxyesters such as t-butylperoxyisobutylate and t-butylperoxypivalate; dialkyl peroxides such as di-t-butyl peroxide; di[perfluoro (or fluorochloro)acyl] peroxides such as di(ω-hydrododecafluoroheptanoyl) peroxide, di(ω-hydrotetradecafluorooctanoyl) peroxide, di(ω-hydrohexadecafluorononanoyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydro-dodecafluoroheptanoyl-ω-hydrohexadecafluorononanoyl peroxide, ω-chloro-hexafluorobutyryl-ω-chloro-decafluorohexanoyl peroxide, ω-hydrododecafluoroheptanoyl-perfluorobutyryl peroxide, di(dichloropentafluorobutanoyl) peroxide, di(trichloro-octafluorohexanoyl) peroxide, di(tetrachloroundecafluorooctanoyl) peroxide, di(pentachlorotetradecafluorodecanoyl) peroxide and di(undecachlorodotoriacontafluorodocosanoyl) peroxide.

Since peroxycarbonates such as diisopropyl peroxycarbonate (IPP) and di-n-propyl peroxycarbonate (NPP), which are typical oil soluble initiators, have an explosion hazard and are expensive and, moreover, have a problem that scales easily adhere to the wall of a polymerization vessel during the polymerization reaction, it is preferable to use water soluble radical polymerization initiators.

Well known water soluble peroxides are usually used as the water soluble radical polymerization initiator. Examples thereof are, for instance, ammonium salts, potassium salts and sodium salts of persulfuric acid, perboric acid, perchloric acid, perphosphoric acid, and percarbonic acid, t-butyl permaleate, and t-butyl hydroperoxide.

The amount of the water soluble radical initiator is not particularly limited, and at least an amount which does not decrease the polymerization rate significantly (for example, several ppm based on water) may be added all at once at the beginning of polymerization, or intermittently or continuously. The upper limit is within the range wherein polymerization reaction heat can be removed from the surface of the equipment.

In the preparation process of the fluorine-containing elastomer used in the present invention, an emulsifier, a molecular weight regulator and a pH regulator can be also added. The molecular weight regulator can be added all at once in the beginning or can be added continuously or dividedly.

As for the emulsifier, nonionic surfactants, anionic surfactants and cationic surfactants can be used, and particularly preferable examples of the anionic surfactants are perfluorooctanoic acid ($CF_3(CF_2)_6COOH$), 1,1,2,2-tetrahydroperfluorohexane sulfonic acid ($CF_3(CF_2)_3CH_2CH_2SO_3H$), 1,1,2,2-tetrahydroperfluorooctane sulfonic acid ($CF_3(CF_2)_5CH_2CH_2SO_3H$), and ammonium salts or alkali metal salts thereof.

Examples of the molecular weight regulator are, for instance, esters such as dimethyl malonate, diethyl malonate, methyl acetate, ethyl acetate, butyl acetate and dimethyl succinate, isopentane, isopropanol, acetone, various mercaptans, carbon tetrachloride, cyclohexane, monoiodo methane, 1-iodoethane, 1-iodo-n-propane, isopropyl iodide, diiodo methane, 1,2-diiodoethane and 1,3-diiodo-n-propane.

Also, a buffer can be added optionally, but the amount thereof is within the range not impairing the effects of

the present invention.

The fluorine-containing elastomer composition of the present invention comprises an organoperoxide vulcanizing agent (B), and a polyfunctional vulcanization aid (C), in addition to the fluorine-containing elastomer (A) explained above.

The organoperoxide vulcanizing agent (B) may be a vulcanizing agent of the peroxide vulcanizing system, and, for example, organoperoxides such as α,α'-bis(t-butylperoxy)diisopropylbenzene, 2,5-dimethyl-2,5-di(t-butylperoxy)hexane and dicumylperoxide may be used. The organoperoxide vulcanizing agent (B) is preferably 2,5-dimethyl-2,5-di(t-butylperoxy)hexane from the viewpoint of vulcanizability and easiness of handling.

The amount of the vulcanizing agent (B) is preferably 0.1 to 10 parts by weight, more preferably 0.1 to 5 parts by weight on the basis of 100 parts by weight of the elastomer. When the amount of the vulcanizing agent is less than 0.1 part by weight, there is a tendency that properties of a fluorine-containing molded article are lowered since the degree of vulcanization is too low. A vulcanizing agent exceeding 10 parts by weight is generally not necessary. However, when a filler is compounded in a large amount, it is preferable that the amount of the vulcanizing agent (B) is 0.5 to 10 parts by weight in order to lower the viscosity of the curable composition.

Examples of the polyfunctional vulcanization aid (C) are triallylcyanurate, triallylisocyanurate (TAIC), tris(diallylamine-s-triazine), triallylphosphite, N,N-diallylacrylamide, hexaallylphosphoramide, N,N,N',N'-tetraallyltetraphthalamide, N,N,N',N'-tetraallylmalonamide, trivinylisocyanurate, 2,4,6-trivinylmethyltrisiloxane and tri(5-norbornene-2-methylene)cyanurate. Among those, triallylisocyanurate (TAIC) is preferable from the viewpoint of vulcanizability and physical properties of a vulcanized article.

The amount of the polyfunctional vulcanization aid (C) is 0.01 to 20 parts by weight based on 100 parts by weight of the elastomer, more preferably 0.1 to 5.0 parts by weight. When the polyfunctional vulcanization aid (C) is less than 0.01 part by weight, there is a tendency that the vulcanizing time becomes too long for practical uses, and when the polyfunctional vulcanization aid (C) is more than 10 parts by weight, stain in a metal mold or molding failure is caused. However, when a filler is compounded in a large amount, it is preferable that the amount of the polyfunctional vulcanization aid (C) is 1.0 to 20 parts by weight in order to lower the viscosity of the curable composition. Also, usual additives such as a processing aid, metal salts having acid acceptance effect such as zinc oxide, magnesium oxide and calcium hydroxide, and adhesives which are cured by crosslinking in the present invention (such as a silane coupling agent, epoxy or a phenol resin) can be used as long as the effects of the present invention are not impaired.

In the fluorine-containing elastomer composition of the present invention, the Mooney viscosity thereof ($ML_{1+10}$ at 100°C) is in a range from 3 to 30, a more preferable lower limit is 4, and a preferable upper limit is 25, a particularly preferable upper limit is 20. Preferable blending conditions in this composition are shown in the following.

(Blending conditions 1)

| | |
|---|---|
| Fluorine-containing elastomer | 100 parts by weight |
| Triallylisocyanurate (TAIC) | 4 parts by weight |
| Perhexa 25B | 1.5 parts by weight |
| Carbon black MT-C | 20 parts by weight (outside claim 1) |

The fluorine-containing elastomer composition of the present invention can be subjected to polyol vulcanization or polyamine vulcanization.

Examples of the vulcanizing agent (B) are organoperoxides such as α-α'-bis(t-butylperoxy)diisopropylbenzene, 2,5-dimethyl-2,5-di(t-butylperoxy)hexane and dicumylperoxide

The amount of the vulcanizing agent is 0.1 to 10 parts by weight, more preferably 0.1 to 5 parts by weight on the basis of 100 parts by weight of the elastomer. When the amount of the vulcanizing agent is less than 0.1 part by weight, there is a tendency that properties of the vulcanized article are impaired since the degree of vulcanization is insufficient. When the amount of the vulcanizing agent is more than 10 parts by weight, since the vulcanization density becomes too high, there is a tendency the vulcanization time becomes long, which is economically unfavorable.

Since the fluorine-containing elastomer used in the fluorine-containing elastomer composition of the present invention has a low molecular weight, even though the filler (D) is compounded in a large amount, increase of a viscosity in the composition can be remarkably suppressed, and since the fluorine-containing elastomer has adhesion, a phenomenon of dropping off the filler from an unvulcanized compound can be largely suppressed.

Examples of the filler (D) are inorganic oxides, carbon, resins and the like, and specific examples are carbon black, Austen Black, graphite (natural graphite, artificial graphite), silica, silicate, clay, diatomite, montmorillonite, talc, calcium carbonate, calcium silicate, barium sulfate, calcium fatty acid, polyethylene, titanium oxide, red iron oxide, boron

nitride, aluminum nitride, magnesium oxide, alumina, carbon nanotube, metallic fiber, metallic powder, conductive metal oxides, heat resistant engineering plastic, fluoropolymers such as an ethylene-tetrafluoroethylene copolymer (ETFE) comprising tetrafluoroethylene and ethylene and polyvinylidene fluoride (PVdF), which are based on PTFE, and a resin filler such as polyimide.

Among these, for uses requiring cleanness, it is preferable to use fluoropolymers such as ETFE and PVdF which are based on PTFE, heat resistant resin such as polyimide, graphitized carbon black and quartz silica synthesized at high purity.

For uses requiring conductivity such as antistatic materials, static rolls for a copying machine, high-voltage shielding materials and electromagnetic shields, it is preferable to use conductive carbon black, metallic fibers, metallic powder and conductive metal oxide.

In the case of utilizing as heat releasing materials used for CPU of a computer, and an engine and a motor of an automobile, nitrides such as boron nitride and aluminum nitride, carbon nanotubes and the like are preferably used in addition to metal oxide such as magnesium oxide and alumina.

The amount of the filler (D) is 60 to 200 parts by weight on the basis of 100 parts by weight of the fluorine-containing elastomer (A). When the amount of the filler (D) is less than 50 parts by weight, there is a tendency that specific functions such as heat releasing property and conductivity cannot be sufficiently exhibited, and when the amount is more than 300 parts by weight, since the viscosity in the step of mixing and kneading with a rubber remarkably increases, there is a tendency of causing molding failure.

The fluorine-containing elastomer composition of the present invention is prepared by further adding 0.1 to 20 parts by weight of the polyfunctional vulcanizing agent (C) to 100 parts by weight of the fluorine-containing elastomer (A) and 0.1 to 10 parts by weight of the organoperoxide vulcanizing agent (B).

The fluorine-containing elastomer composition of the present invention is further preferably a fluorine-containing elastomer wherein the Mooney viscosity ($ML_{1+10}$ at 121°C) of the fluorine-containing elastomer composition is not more than 120, not more than 0.4A+4, and not less than 4, from the viewpoint that molding into a molded article containing a filler in a large amount can be easily carried out, wherein A is the amount of filler (D) in parts by weight per 100 parts by weight of fluorine-containing elastomer (A).

The upper limit of the Mooney viscosity ($ML_{1+10}$ at 121°C) of the fluorine-containing elastomer composition is not more than 120, preferably not more than 0.4A+4, more preferably not more than 0.4A-4. The Mooney viscosity is preferably not more than 80, further more preferably not more than 50. The lower limit is preferably not less than 4, more preferably not less than 7. When the Mooney viscosity is more than 0.4A+4 and/or more than 120, the kneading operation becomes difficult, and there is a tendency that troubles such as scorching or molding failure in which shrinkage of a molded article becomes extraordinarily large easily occur due to dispersion failure or heat generation resulting from increase in viscosity in the step of kneading. On the other hand, when the Mooney viscosity is less than 4, since the viscosity of the composition is too small, there is a tendency that problems such as adhesion of an unvulcanized composition and foaming during vulcanization easily occur.

The preparation process and the vulcanization method of the composition of the present invention are not particularly limited, and for instance, compression molding, extrusion molding and transfer molding can be applied. Particularly, injection molding or integral molding with a resin that is a more advanced molding process are suitable. Even if the secondary vulcanization in molding is omitted, these molding processes are preferable from the viewpoint that compression set is in a satisfactory level.

The composition of the present invention comprising the fluorine containing elastomer (A), the vulcanizing agent (B)polyfunctional vul canization aid (c) and filler (D) is suitably used for a gasket and a packing obtained by integrating a substrate containing inorganic materials such as a coating agent, metal and ceramic with the composition by dispenser-molding, and a double-layered product, a gasket for magnetic storage, a sealing material for a fuel battery, and a sealing material for a clean room facility obtained by coating a substrate containing inorganic materials such as metal and ceramic with the composition. The composition is particularly suitably used for gaskets for an automobile, for example, an intake manifold gasket and an engine head gasket . Further, the composition is also suitably used for molding a material having a complicated shape in which fluidity of the composition is required.

The fluorine-containing elastomer composition of the present invention comprising a filler in a large amount is suitable for uses requiring conductivity such as an antistatic material, an electrostatic roll for a copying machine, a high-voltage blocking material and an electromagnetic shield, and for uses for heat releasing materials used for CPU of a computer and engines and motors of an automobile.

## EXAMPLES

The present invention is then explained in detail by means of Examples, but the invention is not limited only thereto.

<Weight average molecular weight (Mw) and number average molecular weight (Mn)>

Machine: HLC-8000 (made by Tosoh Corporation)
Column:

GPC KF-806M 2 columns
GPC KF-801 1 column
GPC KF-802 1 column

Detector: differential refractometer
Developing solvent: tetrahydrofuran
Temperature: 35°C
Sample concentration: 0.1 % by weight
Standard sample: various monodisperse polystyrenes ((Mw/Mn)=1.14(Max)), TSK standard POLYSTYRENE (made by Tosoh Corporation)

<Mooney viscosity and Mooney scorch>

The Mooney viscosity is measured according to ASTM-D1646 and JIS K 6300.

Measuring instrument: Model MV 2000E made by ALPHA TECHNOLOGIES
Rotor rotational speed: 2 rpm
Measuring temperature: (Mooney viscosity) 100°C or 121°C
(Mooney scorch) 145°C

<Compression set (CS)>

The standard composition described below is subjected to primary press vulcanization and secondary oven vulcanization under the standard vulcanization condition 1 or 2 to prepare an O-ring (P-24). The compression set (CS) after the primary press vulcanization and the compression set after the secondary oven vulcanization are measured according to JIS-K6301 (a sample held at 200°C for 72 hours under 25 % compression and then left for 30 minutes in a constant temperature room at 25°C is measured).

(Standard composition 1)

| | |
|---|---|
| Fluorine-containing elastomer | 100 parts by weight |
| Triallyl isocyanurate (TAIC) | 4 parts by weight |
| Perhexa 25B | 1.5 parts by weight |
| Carbon black MT-C | 20 parts by weight |

(Standard composition 2)

| | |
|---|---|
| Fluorine-containing elastomer | 100 parts by weight |
| Triallyl isocyanurate (TAIC) | 4 parts by weight |
| Perhexa 25B | 1.5 parts by weight |
| Carbon black MT-C | 100 parts by weight |

(Standard vulcanization conditions)

Kneading method: Roll kneading
Press vulcanization: 10 minutes at 160°C
Oven vulcanization: 4 hours at 180°C (omitted when measuring CS without the secondary vulcanization)

< 100 % Modulus (M 100) >

The standard composition is subjected to the primary press vulcanization and the secondary oven vulcanization under the standard vulcanization conditions to give a sheet of 2 mm thickness, and the 100 % modulus thereof is measured according to JIS-K-6251.

<Tensile strength at break (Tb) and elongation at break (Eb)>

The standard composition is subjected to the primary press vulcanization and the secondary oven vulcanization under the standard vulcanization conditions to give a sheet of 2 mm thickness, and measurement is carried out according to JIS-K-6251.

<Hardness (Hs)>

The standard composition is subjected to the primary press vulcanization and the secondary oven vulcanization under the standard vulcanization conditions to give a sheet of 2 mm thickness, and the hardness thereof is measured according to JIS-K-6253.

<Vulcanization properties>

A vulcanization curve at 160°C or 170°C is obtained at the time of conducting the primary press vulcanization by using JSR Curastometer model II and model V, and the minimum viscosity (ML), the vulcanization degree (MH), the induction time ($T_{10}$) and the optimum vulcanization time ($T_{90}$) are determined.

<Measurement of average particle size of polymer>

The average particle size is measured by using Microtrac 9340 UPA (made by Honeywell International Inc.)

<Calculation of the number of particles>

Using the average particle size of polymer obtained above, the number of particles is calculated from the following equation:

$$\text{The number of polymer particles} = \frac{\text{Solid concentration of polymer}}{100 - (\text{Solid content of polymer})} \Big/ \left\{ \frac{4}{3} \times 3.14 \times \left( \frac{\text{Average particle size (nm)}}{2} \times 10^{-9} \right)^3 \times \text{gravity} \times 10^6 \right\}$$

<Composition analysis>

Measurement is carried out using $^{19}F$-NMR (AC 300P type made by the Bruker Co., Ltd.).

<Elemental analysis>

Measurement is carried out with G2350A type made by Yokokawa Hewlett-Packard Company.

<Calculation by Peng-Robinson equation>

Aspen Plus Ver. 11.1 (made by Aspen Tech) is used. The values in the software are used for all of the critical

temperature, critical pressure and eccentric factor of each monomer.

$T_c$:

VdF 29.65°C,
TFE 33.3°C,
HFP 85.0°C

$P_c$:

VdF 4.46 MPa/SQCM,
TFE 3.94 MPa/SQCM,
HFP 3.21 MPa/SQCM

ω:

VdF 0.136,
TFE 0.226,
HFP 0.382

<Spiral mold test>

Measurement is carried out using a full compound of the standard composition with the equipment below under the following conditions.

Spiral mold: 5.6 × 2 × 2,000 mm
Testing machine: M46 tester made by REP Company Molding conditions
Rubber temperature: 70°C on the side of a screw, 80°C on the injection side
Injection amount: 30 cc
Injection speed: maximum
Injection pressure: measured at 6 points (500, 750, 1000, 1250, 1500, 1690 bars)
Injection time: 20 seconds
Metal mold temperature: 160°C
Mold cramping pressure: maximum (140 ton)
Mold cramping speed: maximum
Screw rotational speed: 70 rpm
Nozzle diameter: 2 mm

REFERENCE EXAMPLE 1

(Polymerization of seed polymer particles)

A 1.8 liter polymerization vessel equipped with an electromagnetic induction type stirrer as a stirring device was charged with 720 g of deionized water, 290 g of a 10 % by weight aqueous solution of ammonium perfluorooctanoate and 0.6 g of diethyl malonate. After the system was sufficiently replaced with nitrogen gas, the pressure was reduced. This procedure was repeated 3 times. 20 g of VdF and 51 g of HFP were added under reduced pressure and the temperature was raised to 80°C while stirring. Subsequently, 0.02 g of ammonium persulfate (APS) dissolved in 0.6 g of deionized water was introduced using nitrogen gas under pressure to start polymerization. The polymerization pressure was set to 2 MPa and in order to compensate for the pressure decrease during the polymerization, a monomer mixture of VdF/HFP (78/22 (% by mol)) was supplied successively and the polymerization was conducted while stirring. 215 g of monomers was supplied into the vessel until polymerization was completed.

The weight of the obtained emulsion was 1,233 g, the polymer concentration was 18.1 % by weight, and the number of polymer particles was $1.2 \times 10^{16}$ particles/ 1 g of water. After 30 minutes, stirring was stopped and the monomers were discharged to terminate the polymerization.

REFERENCE EXAMPLE 2

(Polymerization of seed polymer particles)

The same polymerization vessel used in Reference Example 1 was charged with 809 g of deionized water and 200 g of a 10 % by weight aqueous solution of ammonium perfluorooctanoate. After the system was sufficiently replaced with nitrogen gas, the pressure was reduced. This procedure was repeated 3 times. 0.5 mL of isopentane was added under reduced pressure and each of the monomers were added so that the composition inside the vessel at 80°C became VdF/TFE/HFP = 29.0/13.0/58.0 % by mol and the pressure inside the vessel became 1.4 MPa. After the temperature was increased, 0.67 g of ammonium persulfate (APS) dissolved in 20 g of deionized water was injected by nitrogen gas to start polymerization. The polymerization pressure was set to 1.4 MPa and in order to compensate for the pressure decrease during the polymerization, a monomer mixture of VdF/TFE/HFP (50/20/30 (% by mol)) was supplied successively and the polymerization was conducted while stirring. 320 g of monomers was supplied into the vessel until polymerization was completed.

The weight of the obtained emulsion was 1285 g, the polymer concentration was 24.8 % by weight and the number of polymer particles was $1.0 \times 10^{16}$ particles/ 1 g of water. After 360 minutes, stirring was stopped and the monomers were discharged to terminate the polymerization.

EXAMPLE 1

A 2.5 liter polymerization vessel equipped with the same electromagnetic induction type stirring device as in Reference Example 1 was charged with 1324 g of deionized water, 33.5 g of an aqueous dispersion of the polymer particles prepared in Reference Example 1 and 19.1 g of a 10 % by weight aqueous solution of ammonium perfluorooctanoate. After the system was sufficiently replaced with nitrogen gas, the pressure was reduced. This procedure was repeated 3 times, and 171 g of VdF and 729 g of HFP were added under reduced pressure, and the temperature was raised to 80°C with stirring. Subsequently, 5.96 g of octafluoro-1,4-diiodobutane and 0.068 g of APS dissolved in 15 g of deionized water were introduced using nitrogen gas under pressure to start polymerization, and the polymerization was continued under the following conditions (a), (b) and (c). After 3.4 hours, stirring was stopped, and the unreacted monomers were discharged to terminate the polymerization.

(a) The critical temperature and critical pressure of the composition VdF/HFP = 36/64 (% by mol) in the polymerization vessel were calculated by the Peng-Robinson equation using Aspen Plus Ver. 11.1, and $T_c$ = 87.7°C and $P_c$ = 3.05 MPa were found. Furthermore, conversion was conducted by reduced temperature $T_R$ of 0.95 and reduced pressure $P_R$ of 0.80 to give T = 69.7°C and P = 2.44 MPa, which showed that this Example was carried out under the polymerization conditions of reduced temperature $T_R$ of not less than 0.95 and reduced pressure $P_R$ of not less than 0.80.
(b) A monomer mixture of VdF/HFP (95/5 % by mol) was supplied continuously to maintain the pressure of the gaseous phase at 6 MPa. 190 g of the monomers were supplied to the vessel until the polymerization was completed.
(c) The stirring speed was maintained at 560 rpm.
(d) After the lapse of three hours from the start of the polymerization, 0.034 g of APS dissolved in 15 g of deionized water was charged.

A weight of the obtained emulsion was 1,899 g, and a polymer concentration thereof was 28.6 % by weight, and the number of polymer particles was $2.6 \times 10^{14}$ per 1 g of water. This polymer emulsion was coagulated with aluminum sulfate and dehydrated, thereafter dried for 15 hours with a hot air dryer at 130°C to obtain 543 g of an elastomer. According to measurement by GPC, a weight average molecular weight Mw of this polymer was 94,000, a number average molecular weight Mn was 48,000, and Mw/Mn was 1.9. The composition of the polymer measured by $^{19}$F-NMR was VdF/HFP = 77/23 (% by mol), an iodine content by the elemental analysis was 0.53 % by weight, and a Mooney viscosity $ML_{1+10}$ at 100°C was 11. This elastomer was subjected to roll kneading under the standard composition conditions 1, and a full compound having a Mooney viscosity $ML_{1+10}$ of 8 was obtained.

EXAMPLE 2

A 1.8 liter polymerization vessel equipped with the same electromagnetic induction type stirring device as in Reference Example 1 was charged with 970 g of deionized water and 27 g of an aqueous dispersion of the polymer particles prepared in Reference Example 2. After the system was sufficiently replaced with nitrogen gas, the pressure was reduced. This procedure was repeated 3 times, and 18 g of VdF, 22 g of TFE and 537 g of HFP were added under reduced pressure, and the temperature was raised to 80°C with stirring. Subsequently, 2.8 g of octafluoro-1,4-diiodobutane and 0.05 g of APS dissolved in 15 g of deionized water were introduced using nitrogen gas under pressure to start polymerization, and the polymerization was continued under the following conditions (a), (b) and (c). After 3.6 hours, stirring was stopped and monomers were discharged to terminate the polymerization.

(a) The critical temperature and critical pressure of the composition VdF/TFE/HFP = 6.5/5.0/88.5 (% by mol) in the polymerization vessel were calculated by the Peng-Robinson equation using Aspen Plus Ver. 11.1, and $T_c$ = 78.8°C and $P_c$ = 3.32 MPa were found. Furthermore, conversion was conducted by reduced temperature $T_R$ of 0.95 and reduced pressure $P_R$ of 0.80 to give T = 61.2°C and P = 2.66 MPa, which showed that this Example was carried out under the polymerization conditions of reduced temperature $T_R$ of not less than 0.95 and reduced pressure $P_R$ of not less than 0.80.
(b) A monomer mixture of VdF/TFE/HFP (68.0/23.8/8.2 (% by mol)) was supplied continuously to maintain the pressure of the gaseous phase at 3.5 MPa. 247 g of the monomers were supplied to the vessel until the polymerization was completed.
(c) The stirring speed was maintained at 560 rpm.

A weight of the obtained emulsion was 1,368 g, a polymer concentration thereof was 26.8 % by weight, and the number of polymer particles was $9.5 \times 10^{14}$ per 1 g of water. This polymer emulsion was coagulated with aluminum sulfate and dehydrated, thereafter dried for 15 hours with a hot air dryer at 130°C to obtain 369 g of a fluorine-containing elastomer. According to measurement by GPC, and a weight average molecular weight Mw of this elastomer was 67,000, a number average molecular weight Mn was 48,000, and Mw/Mn was 1.4. The composition of the polymer measured by $^{19}$F-NMR was VdF/TFE/HFP = 50.7/19.5/29.8 (% by mol), an iodine content by the elemental analysis was 0.32 % by weight, and a Mooney viscosity $ML_{1+10}$ at 100°C was 14. This elastomer was subjected to roll kneading under the standard composition conditions 1, and a full compound having the Mooney viscosity $ML_{1+10}$ of 11 was obtained.

EXAMPLE 3

The fluorine-containing elastomer obtained in Example 1 was subjected to roll kneading under the standard composition conditions 2. A filler was scarcely dropped from an unvulcanized composition since dispersion condition was extremely favorable and the composition had appropriate adhesion. A full compound having a Mooney viscosity $ML_{1+10}$ at 121°C of 18 was obtained.

EXAMPLE 4

A full compound having a Mooney viscosity $ML_{1+10}$ at 121°C of 36 was obtained in the same manner as in Example 3 except that the fluorine-containing elastomer obtained in Example 2 was used instead of the fluorine-containing elastomer composition obtained in Example 1.

EXAMPLE 5

A full compound having a Mooney viscosity $ML_{1+10}$ at 121°C of 3 was obtained in the same manner as in Example 3 except that aluminum oxide (ALUNABEADS/CB-40A available from SHOWA DENKO K.K.) was used as a filler.

COMPARATIVE EXAMPLE 1

According to measurement by GPC, a weight average molecular weight Mw of G-802 available from Daikin Industries, Ltd. was 151,000, a number average molecular weight Mn thereof was 77,000, and Mw/Mn was 2.0. The composition of the polymer measured by $^{19}$F-NMR was VdF/HFP = 78/22 (% by mol), an iodine content by the elemental analysis was 0.22 % by weight, and a Mooney viscosity $ML_{1+10}$ at 100°C was 42. This elastomer was subjected to roll kneading under the standard composition conditions, and a full compound having a Mooney viscosity $ML_{1+10}$ of 38 was obtained.

COMPARATIVE EXAMPLE 2

A full compound having a Mooney viscosity $ML_{1+10}$ of 14 was obtained by subjecting a fluorine-containing elastomer prepared by the preparation process described in Example 2 of WO 2004/009647 (a weight average molecular weight MW was 107,000, a number average molecular weight Mn was 43,000, Mw/Mn was 2.5, the composition of a polymer measured by $^{19}$F-NMR was VdF/HFP = 77/23 (% by mol), iodine atoms were not substantially contained; a polymer (Mooney viscosity $ML_{1+10}$ at 100°C was 7) was used since it was required for this polymer to have a polyol

composition to carry out roll kneading under the standard composition 1 described in Example 6 of the publication.

COMPARATIVE EXAMPLE 3

A full compound having a Mooney viscosity $ML_{1+10}$ at 121°C of 73 was obtained in the same manner as in Example 3 except that a fluorine-containing elastomer composition (G-802 available from Daikin Industries, Ltd.) used in Comparative Example 1 was used instead of the fluorine-containing elastomer obtained in Example 1. The viscosity of the composition was extremely high, and scorch was generated during measuring the Mooney viscosity at 121°C.

COMPARATIVE EXAMPLE 4

A full compound having a Mooney viscosity $ML_{1+10}$ at 121°C of 73 was obtained in the same manner as in Example 3 except that G-801 (available from Daikin Industries, Ltd.) was used instead of the fluorine-containing elastomer obtained in Example 1. Scorch was generated during measuring the Mooney viscosity at 121°C.

COMPARATIVE EXAMPLE 5

A full compound having a Mooney viscosity $ML_{1+10}$ at 121°C of 1 was obtained in the same manner as in Comparative Example 4 except that aluminum oxide (ALUNABEADS/CB-40A available from SHOWA DENKO K.K.) was used as a filler. Dispersion condition was extremely poor, and an unvulcanized rubber was in a state of a filler being easily dropped off.

Evaluations of physical properties of molded articles obtained by vulcanizing full compounds obtained in Examples 1 to 4 and Comparative Examples 1 and 3 to 5 under the standard vulcanization conditions, and vulcanization characteristics and physical properties in the normal state of full compounds obtained under the vulcanization conditions in Comparative Example 2 are shown in Tables 1 and 2.

TABLE 1

| | Unit | Ex. 1 | Ex. 2 | Com. Ex.1 | Com. Ex. 2 |
|---|---|---|---|---|---|
| Curastometer II (test temperature) | | (160°C) | (160°C) | (160°C) | (170°C) |
| Minimum torque (ML) | kgf | 0.0 | 0.1 | 0.1 | 0.0 |
| Vulcanization degree (MH) | kgf | 4.1 | 4.6 | 3.2 | 0.8 |
| Induction time ($T_{10}$) | min | 1.1 | 1.0 | 0.9 | 8.2 |
| Optimum vulcanization time ($T_{90}$) | min | 2.9 | 2.2 | 2.1 | 16.4 |
| Mooney scorch (t5) | min | 6.8 | 6.6 | 5.8 | 29.1 |
| Physical properties in the normal state | | | | | |
| 100 % modulus | MPa | 2.7 | 4.1 | 1.8 | 3.6 |
| Tensile strength at break | MPa | 20 | 20 | 23 | 11 |
| Tensile elongation at break | % | 300 | 270 | 450 | 250 |
| Hardness (shore A) peak value | | 68 | 73 | 67 | 76 |
| Compression set (200°C × 72 hr) | | | | | |
| No secondary vulcanization | % | 23 | 24 | 30 | 41 |
| After oven vulcanization | % | 20 | 20 | 27 | 19 |

TABLE 2

| | Unit | Ex.3 | Ex.4 | Ex.5 | Com. Ex.3 | Com. Ex.4 | Com. Ex.5 |
|---|---|---|---|---|---|---|---|
| Amounts | | | | | | | |
| Polymer in Ex. 1 | Part | 100 | - | 100 | - | - | - |
| Polymer in Com. Ex. 1 | Part | | - | - | 100 | - | - |
| Polymer G-801 (available from Daikin Industries, Ltd.) | Part | - | | - | - | 100 | 100 |

(continued)

| | Unit | Ex.3 | Ex.4 | Ex.5 | Com. Ex.3 | Com. Ex.4 | Com. Ex.5 |
|---|---|---|---|---|---|---|---|
| Polymer in Ex. 2 | Part | - | 100 | - | - | - | - |
| MT carbon | Part | 100 | 100 | - | 100 | 100 | - |
| Aluminum oxide | Part | - | - | 100 | - | - | 100 |
| TAIC | Part | 4.0 | 4.0 | 4.0 | 4.0 | 4.0 | 4.0 |
| Perhexa25B | Part | 1.5 | 1.5 | 1.5 | 1.5 | 1.5 | 1.5 |
| Evaluation results | | | | | | | |
| Mooney viscosity 1+10 (100°C) of polymers | | | | | | | |
| $ML_{1+10}$ | | 7 | 14 | 7 | 42 | 67 | 67 |
| Mooney viscosity (121°C) of curable compositions | | | | | | | |
| $ML_{1+4}$ | | 18 | 53 | 3 | 68 | 99 | 6 |
| $ML_{1+10}$ | | 18 | 36 | 3 | 73 | 113 | 1 |
| Remarks | | Excellent dispersion | Excellent dispersion | Excellent dispersion | Scorch | Scorch | dispersion failure |
| Vulcanization characteristics (test temperature 160°C) | | | | | | | |
| JSR Curastometer II | | | | | | | |
| Minimum torque (ML) | Kgf | 0.05 | 0.10 | - | 0.22 | 0.40 | - |
| Vulcanization degree (MH) | Kgf | 8.0 | 16.2 | - | 5.5 | 5.1 | - |
| Induction time ($T_{10}$) | min | 1.1 | 1.2 | - | 0.9 | 1.1 | - |
| Optimum vulcanization time ($T_{90}$) | min | 5.2 | 5.4 | - | 3.3 | 3.3 | - |
| JSR Curastometer V | | | | | | | |
| Minimum torque (ML) | Kgfcm | 0.60 | 1.30 | 0.05 | 1.95 | 2.94 | 1.33 |
| Vulcanization degree (MH) | Kgfcm | 54.8 | 59.8 | 30.2 | 35.7 | 34.7 | 21.3 |
| Induction time ($T_{10}$) | min | 1.7 | 1.8 | 1.5 | 1.3 | 1.2 | 1.0 |
| Optimum vulcanization time ($T_{90}$) | min | 5.8 | 6.1 | 6.5 | 5.3 | 5.3 | 4.4 |
| Physical properties in the normal state | | | | | | | |
| 100 % modulus | MPa | 17.1 | - | | 13.3 | 13.6 | |

(continued)

| | Unit | Ex.3 | Ex.4 | Ex.5 | Com. Ex.3 | Com. Ex.4 | Com. Ex.5 |
|---|---|---|---|---|---|---|---|
| Tensile strength at break | MPa | 19.6 | 19.6 | | 18.7 | 18.9 | |
| Tensile elongation at break | % | 125 | 95 | | 175 | 170 | |
| Hardness (shore A) peak value | | 94 | 95 | | 94 | 94 | |
| Hardness (shore A) one second value | | 93 | 94 | | 93 | 93 | |
| Compression set 200°C 72 hours | % | 19 | 23 | | 26 | 31 | |

The spiral test results of full compounds obtained in Example 1 and Comparative Example 1 are shown in Table 3.

TABLE 3

| | Ex. 1 | Com. Ex. 1 |
|---|---|---|
| Injection pressure (MPa) | Injection length of molded articles (mm) | |
| 50 | 509 | 245 |
| 75 | 722 | 337 |
| 100 | 831 | 412 |
| 125 | 923 | 420 |
| 150 | 998 | 516 |
| 169 | 1051 | 522 |

INDUSTRIAL APPLICABILITY

The present invention can provide a fluorine-containing elastomer composition remarkably improved in fluidity and scorch resistance and can be used suitably for an injection molding method being excellent in productivity. General equipments such as a roll mixer and an internal mixer can be used for the fluorine-containing elastomer composition of the present invention, and defoaming can be easily carried out as compared with a liquid rubber. Despite that the fluorine-containing elastomer composition of the present invention has a low viscosity, it was found that properties such as a modulus ($M_{100}$) at vulcanization and a compression set (CS) of a molded article are improved, and improvement of both physical properties and processability is compatible. Further, even if the secondary vulcanization is not carried out, the composition has sufficiently satisfactory properties, therefore, integral molding with resin or other rubbers and two colored-molding, which are more advanced molding processes can be carried out, and it was found that the composition was suitable for molding a part requiring fluidity since it has more complicated shape.

## Claims

**1.** A fluorine-containing elastomer composition comprising:

(A) a fluorine-containing elastomer composed of (i) a structural unit derived from vinylidene fluoride and (ii) a structural unit derived from at least one monomer selected from the group consisting of hexafluoropropylene, tetrafluoroethylene, ethylene, propylene, chlorotrifluoroethylene, perfluoro (alkyl vinyl ether) in which the alkyl group may contain oxygen in the form of an ether linkage, and having

(a) a number average average molecular weight (Mn) of 30,000 to 70,000 g/mol,
(b) iodine content of 0.3 to 1.0 % by weight,
(c) a molecular weight distribution (weight average molecular weight Mw/number average molecular weight

(Mn) of 1.3 to less than 4.0, and
(d) a Mooney viscosity ($ML_{1+10}$ at 100°C) of 3-30;

(B) an organoperoxide vulcanizing agent in an amount of 0.1 to 10 parts by weight based on 100 parts by weight of said fluorine-containing elastomer;
(C) a polyfunctional vulcanization aid in an amount of 0.01 to 20 parts by weight based on 100 parts by weight of said fluorine-containing elastomer; and
(D) a filler in an amount of 60 to 200 parts by weight based on 100 parts by weight of said fluorine-containing elastomer.

**2.** The fluorine-containing elastomer composition of Claim 1, wherein the Mooney viscosity ($ML_{1+10}$ at 121°C) of said fluorine-containing elastomer composition is not more than 120, not more than 0.4A+4,
wherein A is the amount of filler (D) in parts by weight per 100 parts by weight of fluorine-containing elastomer (A), and not less than 4.

**3.** The fluorine-containing elastomer composition of Claim 1 or 2, wherein said filler (D) is selected from the group consisting of carbon black, natural graphite, artificial graphite, silica, silicate, boron nitride, aluminum nitride, magnesium oxide, alumina and carbon nanotube.

**4.** A molded article, which is obtained by vulcanizing the fluorine-containing elastomer composition of any of Claims 1 to 3.

**Patentansprüche**

**1.** Fluor enthaltende Elastomerzusammensetzung, umfassend:

(A) ein Fluor enthaltendes Elastomer, das aus (i) einer Struktureinheit, die aus Vinylidenfluorid abgeleitet ist und (ii) einer Struktureinheit, die aus mindestens einem Monomer ausgewählt aus der Gruppe bestehend aus Hexafluoropropylen, Tetrafluoroethylen, Ethylen, Propylen, Chlortrifluoroethylen, Perfluoro(alkylvinylether), in dem die Alkylgruppe Sauerstoff in Form einer Etherverknüpfung enthalten kann, abgeleitet ist, und das

(a) ein zahlengemitteltes Molekulargewicht (Mn) von 30.000 bis 70.000 g/mol,
(b) einen Jodgehalt von 0,3 bis 1,0 Gew.%,
(c) eine Molekulargewichtsverteilung (gewichtsgemitteltes Molekulargewicht Mw/zahlengemitteltes Molekulargewicht Mn) von 1,3 bis weniger als 4,0, und
(d) eine Mooney-Viskosität ($ML_{1+10}$ bei 100°C) von 3 bis 30 aufweist;

(B) ein Organoperoxid-Vulkanisierungsmittel in einer Menge von 0,1 bis 10 Gew.-Teile auf Basis von 100 Gew.-Teilen des Fluor enthaltenden Elastomers;
(C) ein polyfunktionales Vulkanisierungshilfsmittel in einer Menge von 0,01 bis 20 Gew.-Teilen auf Basis von 100 Gew.-Teilen des Fluor enthaltenden Elastomers; und
(D) einen Füllstoff in einer Menge von 60 bis 200 Gew.-Teilen auf Basis von 100 Gew.-Teilen des Fluor enthaltenden Elastomers.

**2.** Fluor enthaltende Elastomerzusammensetzung gemäß Anspruch 1, worin die Mooney-Viskosität ($ML_{1+10}$ bei 121°C) der Fluor enthaltenden Elastomerzusammensetzung nicht mehr als 120, nicht mehr als 0,04A+4, worin A die Menge des Füllstoffs (D) in Gewichtsteilen pro 100 Gew.-Teilen des Fluor enthaltenden Elastomers (A) ist, und nicht weniger als 4 ist.

**3.** Fluor enthaltende Elastomerzusammensetzung gemäß Anspruch 1 oder 2, worin der Füllstoff (D) aus der Gruppe bestehend aus Ruß, natürlichem Graphit, künstlichem Graphit, Siliziumdioxid, Silikat, Bornitrid, Aluminiumnitrid, Magnesiumoxid, Aluminiumoxid und Kohlenstoff-Nanotubes ausgewählt ist.

**4.** Geformter Artikel, der durch Vulkanisieren der Fluor enthaltenden Elastomerzusammensetzung gemäß irgendeinem der Ansprüche 1 bis 3 erhalten wird.

## Revendications

1. Composition d'élastomère contenant du fluor, comprenant:

   (A) un élastomère contenant du fluor composé (i) d'une unité structurelle dérivée de fluorure de vinylidène et (ii) d'une unité structurelle dérivée d'au moins un monomère choisi dans le groupe constitué par l'hexafluoropropylène, le tétrafluoroéthylène, l'éthylène, le propylène, le chlorotrifluoroéthylène, un perfluoro(éther d'alkyle et vinyle) dans lequel le groupe alkyle peut contenir de l'oxygène sous forme d'une liaison éther, et ayant

      (a) une masse molaire moyenne en nombre (Mn) de 30 000 à 70 000 g/mol,
      (b) une teneur en iode de 0,3 à 1,0 % en masse,
      (c) une distribution de masses molaires (masse molaire moyenne en poids Mw/masse molaire moyenne en nombre Mn) de 1,3 à moins de 4,0, et
      (d) une viscosité Mooney ($ML_{1+10}$ à 100°C) de 3-30;

   (B) un agent de vulcanisation de type organoperoxyde en une quantité de 0,1 à 10 parties en masse pour 100 parties en masse dudit élastomère contenant du fluor;
   (C) un auxiliaire de vulcanisation polyfonctionnel en une quantité de 0,01 à 20 parties en masse pour 100 parties en masse dudit élastomère contenant du fluor; et
   (D) une charge en une quantité de 60 à 200 parties en masse pour 100 parties en masse dudit élastomère contenant du fluor.

2. Composition d'élastomère contenant du fluor selon la revendication 1, où la viscosité Mooney ($ML_{1+10}$ à 121°C) de ladite composition d'élastomère contenant du fluor est d'au plus 120, d'au plus 0,4A+4, où A est la quantité de charge (D) en parties en masse pour 100 parties en masse d'élastomère contenant du fluor (A), et d'au moins 4.

3. Composition d'élastomère contenant du fluor selon la revendication 1 ou 2, où ladite charge (D) est choisie dans le groupe constitué par du noir de carbone, du graphite naturel, du graphite artificiel, de la silice, un silicate, du nitrure de bore, du nitrure d'aluminium, de l'oxyde de magnésium, de l'alumine et des nanotubes de carbone.

4. Article moulé, qui est obtenu par vulcanisation de la composition d'élastomère contenant du fluor selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 53125491 A
- US 4243770 A
- JP 62012734 A
- JP 56057811 A
- JP 10067821 A
- JP 11152311 A
- WO 9815583 A
- WO 2004009647 A
- JP 2000034381 A
- EP 0398241 A2
- EP 0784064 A1
- US 5077359 A
- JP 08157538 A
- US 5674959 A
- JP 6508161 A
- WO 0001741 A
- JP 63008406 B
- JP 62288609 B


### Non-patent literature cited in the description


- **Masayoshi Tatemoto.** Symposium on Micromolecules, Control of Polymer Structure in Radical Polymerization. The Society of Polymer Science, Japan, 1986, 19, 86, 6
- **D. Y. Peng ; D. B. Robinson.** A New Two-Constant Equation of State. *Ind. Eng. Chem. Fund.,* 1976, vol. 15, 59-64